# EUROPEAN PATENT APPLICATION

(11) **EP 1 647 744 A1**
(43) Date of publication of application: **19.04.2006**
(21) Application number: 05256034.9
(22) Date of filing: 28.09.2005
(51) Int. Cl.: F16J 15/08, F01D 11/00

(54) **A sealing arrangement**

(30) Priority: 15.10.2004 GB 0423056
(71) Applicant: ROLLS-ROYCE PLC, London, SW1E 6AT (GB)
(72) Inventor: Cristinacce, Nicholas Simon Andre, Tintern Monmouthshire NP16 6TR (GB); Harman, Adam, Bristol BS7 0JD (GB)
(74) Representative: Bird, Vivian John

(57) **Abstract**

A sealing arrangement, for example in a turbine stage of a gas turbine engine, comprises a single ring 60' extending between abutment surfaces 56', 58' of annular components 2, 4. The sealing ring 60' is dished so that it extends rearwardly from an inner peripheral region 66' of the sealing ring 60', which respect to a direction X projecting axially outwardly of the abutment surface 58'. The sealing ring 60' thus acts as a reverse angle Belleville seal.

## Description

This invention relates to a sealing arrangement between first and second annular components, and is particularly, although not exclusively, concerned with such a sealing arrangement in a gas turbine engine.

The structure surrounding the turbine stages of a gas turbine engine is subjected to significant temperature fluctuations during the operating cycle of the engine. Consequently, components of the structure may move relatively to one another, and this movement may cause difficulties if a seal is to be maintained between two components. To achieve sealing, it is known to provide a "Belleville" seal, which comprises a dished sealing ring of generally conical form fitted between the components. Thus, it is known from the prior art to provide a sealing arrangement between first and second annular components having a common axis, the arrangement including a resilient dished sealing ring having an outer peripheral region which contacts an abutment surface of the first component and an inner peripheral region which contacts an abutment surface of the second component whereby the sealing ring is axially stressed between the abutment faces.

In the known arrangement, the sealing ring is inclined away from the abutment surface of the second component so that, in the radially outwards direction, the sealing ring slopes forwardly from a radial plane containing the inner peripheral region with respect to a direction axially outwardly of the abutment surface engaged by the inner peripheral region. In such an arrangement, the abutment surfaces are disposed in axially spaced planes and face towards each other. Consequently, as the abutment surfaces move towards each other, the dished sealing ring is axially compressed, so flattening its conical shape.

When used in a gas turbine engine, for example to seal between components of the structure surrounding the turbine stage of the turbine engine, a temperature gradient is created in the structure, with the temperature being very high adjacent the gas flow path through the turbine stage, but decreasing in the radially outwards direction. This temperature gradient varies over the operating cycle of the engine (ie acceleration to idle, hold, acceleration to take-off, hold, deceleration to cruise, etc). The temperature gradient results in differential thermal expansion between the first and second annular components, tending to displace the abutment surfaces so as to compress the Belleville seal. The temperature gradient also tends to affect the stresses in the Belleville seal itself. This results from a temperature gradient between the inner and outer peripheral regions of the Belleville seal, causing the inner periphery to expand radially which, in turn, increases the stress tending to displace the inner peripheral region away from the plane of the outer peripheral region. This effect tends to oppose the relative displacement between the first and second components and consequently increases the stress in the Belleville sealing ring. This increased stress, which arises cyclically over the operative cycle of the engine, can cause premature failure of the sealing ring, particularly when used in environments in which higher radial temperature gradients occur and/or higher relative movements between the abutment surfaces occur.

According to the present invention, the sealing ring is dished so that it extends obliquely from the inner peripheral region in a direction inclined rearwardly from a radial plane containing the inner peripheral region with respect to a direction axially outwardly of the abutment surface engaged by the inner peripheral region.

Thus, the sealing ring can be regarded as a reverse angle Belleville seal. When a temperature gradient arises, the resulting relative axial displacement between the abutment surfaces tends to move the inner and outer peripheral regions of the sealing ring axially away from one another, so reducing the vertex angle of the conical shape of the sealing ring. Furthermore, when a temperature gradient arises which causes the abutment surface of the second annular component to move forwards, with respect to the direction axially outwardly of that abutment surface, the same temperature gradient, acting to cause radial expansion of the inner peripheral region of the sealing ring, tends to cause the inner peripheral region to follow the movement of the abutment surface which it engages, rather than opposing such movement.

Consequently, the peak stress in the sealing ring is reduced, so prolonging its life.

In an embodiment in accordance with the present invention, the abutment surface of the inner component is situated ahead of a plane containing the abutment surface of the outer component, with respect to the direction axially outwardly of the abutment surface engaged by the inner peripheral region. Thus the abutment surfaces, in effect, face axially away from each other.

Preferably, the abutment surfaces are parallel to each other and extend radially with respect to the common axis of the annular components. However, alternative dispositions of the abutment surfaces are possible.

The sealing ring is preferably made from a metallic material, which may be spring steel or a suitable aerospace superalloy capable of withstanding high temperatures.

The inner and outer peripheral regions of the sealing ring may take the form of sealing rims, having sealing faces which are complementary to those of the abutment surfaces. In a preferred embodiment, the abutment surfaces and the sealing surfaces are flat. The inner and outer peripheral regions may be interconnected by a dished intermediate region. The intermediate region may have a substantially constant thickness over its full extent.

The first and second annular components may be components of a gas turbine engine, for example components of structure surrounding a turbine stage of a gas turbine engine.

As mentioned above, a sealing arrangement in accordance with the present invention serves to cause one or both of the inner and outer peripheral regions of the sealing ring to follow axial displacement of the respective abutment surfaces which they engage. Thus, according to another aspect of the present invention there is provided a sealing arrangement between first and second annular components having a common axis, the second annular component having an abutment surface which, upon heating of the second annular component, is displaced axially relatively to the first annular component, the arrangement including a dished resilient sealing ring having inner and outer circumferential peripheral regions, one of which resiliently contacts the abutment surface, characterised in that the configuration of the sealing ring is such that, when the peripheral region contacting the abutment surface is heated relatively to the other peripheral region, the load applied by the contacting region to the abutment surface is decreased to compensate for the axial displacement of the abutment surface.

For a better understanding of the present invention, and to show more clearly how it may be carried into effect, reference will now be made, by way of example, to the accompanying drawings, in which:-
Figure 1 shows a known sealing arrangement;
Figure 2 shows a sealing arrangement in accordance with the present invention; and
Figure 3 shows a sealing arrangement corresponding to Figure 2 in a gas turbine engine.

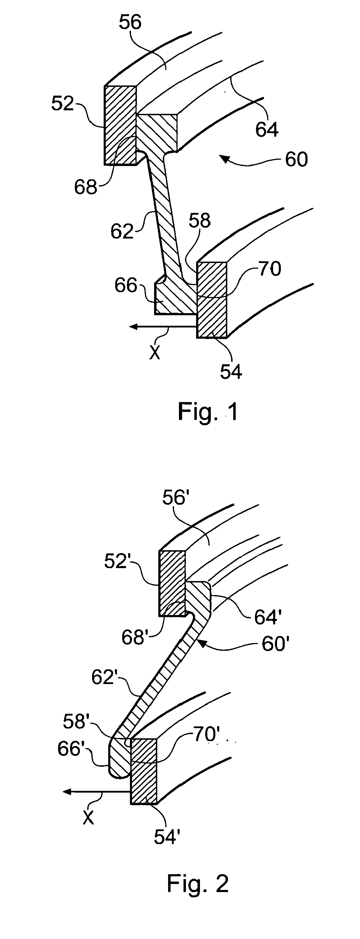

Figure 1 shows, diagrammatically, inner and outer annular components 52, 54. The components 52, 54 are centred on a common axis (not shown), and have respective abutment surfaces 56, 58. The abutment surfaces 56, 58 are parallel to each other, and extend radially with respect to the common axis.

A notional forward direction is defined by an arrow X which projects outwardly from and, normal to, the abutment surface 58 of the inner component 54. With respect to this forward direction, it will be appreciated that the abutment face 56 is axially ahead of the abutment face 58.

A sealing ring 60 extends between the abutment surfaces 56, 58. The sealing ring 60 is a Belleville seal, and is thus a dished ring comprising a conical intermediate region 62 extending between outer and inner peripheral regions 64, 66. The intermediate region 62 is of generally constant thickness over its entire extent, and the peripheral regions 64, 66 are somewhat thicker, and consequently can be regarded as outer and inner sealing rims. Each of these rims 64, 66 has a flat contact surface 68, 70, and these engage the abutment faces 56, 58 in a sealing manner. The sealing ring 60 thus seals the space between the components 52, 54.

The sealing arrangement shown in Figure 1 can accommodate relative axial movement between the abutment surfaces 56, 58, by virtue of the resilience of the sealing ring 60 which may, for example, be made from a high-temperature superalloy suitable for aerospace applications.

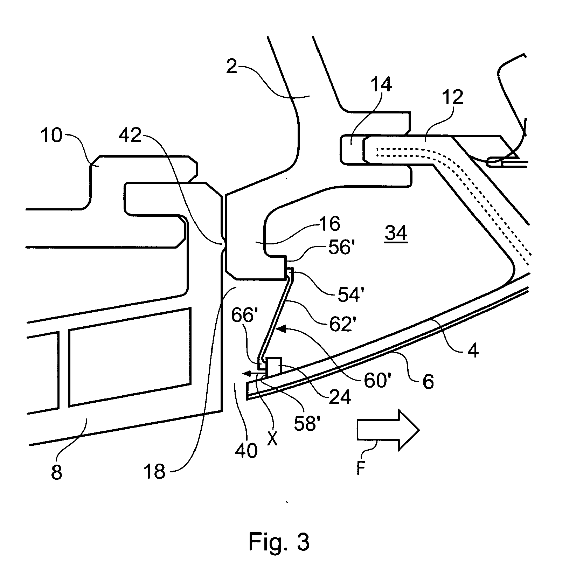

If the sealing arrangement shown in Figure 1 is used in the structure surrounding the turbine stage of a gas turbine engine, for example a structure similar to that shown in Figure 3, a temperature gradient will arise during the operating cycle of the engine. For example, when the power output of the engine is increased, the temperature of the inner component 54 will increase more rapidly than that of the outer component 52. Depending on the design of the engine, the increase in temperature of the inner component 54 will cause it to expand, moving the abutment surface 58 in the direction of the arrow X. For the purposes of this description, it can be assumed that the axial position of the abutment surface 56 of the outer component 52 remains in the same axial position, and it will be appreciated that the resulting relative movement will cause the sealing ring 60 to be axially compressed, increasing the vertex angle of the dished intermediate region 62. However, the inner peripheral region 66 of the sealing ring 60 will heat up more quickly than the outer peripheral region 64, and this will cause the inner peripheral region 66 to expand radially. Owing to the dished shape of the ring 60, this radial expansion will, if unopposed, cause the inner peripheral region 66 to move in the direction opposite to the arrow X. However, because the inner peripheral region 66 abuts the abutment surface 58, this movement is prevented and the stress within the sealing ring 60, already increased by the axial displacement of the abutment surface 58, will increase further.

The sealing ring 60 will thus be subjected to a relatively high peak stress during the operating cycle of the engine. This cyclic stressing of the sealing ring 60 can lead to premature failure.

Figure 2 shows a sealing ring 60' in accordance with the present invention. As in the prior art sealing arrangement shown in Figure 1, the sealing ring 60' provides a seal between inner and outer annular components 52', 54' having abutment surfaces 56', 58'. However, in the embodiment shown in Figure 2, the direction of inclination of the intermediate region 62' of the sealing ring 60 is reversed, compared with that of the prior art sealing arrangement shown in Figure 1. This has the effect that, with reference to the forward direction X, the inner peripheral region 66' is ahead of, rather than behind, the outer peripheral region 64'. Similarly, in the embodiment shown in Figure 2, the abutment surface 56' is behind the abutment surface 58' so that the abutment surfaces 56', 58' face axially away from each other, rather than towards each other as in the prior art sealing arrangement of Figure 1.

Under the conditions referred to above with regard to Figure 1, in which the sealing arrangement is subjected to a radially outwardly decreasing thermal gradient so that the abutment surface 58' of the inner component 54' moves in the direction of the arrow X, radial expansion of the inner peripheral region 66' will tend to cause it to move also in the direction of the arrow X. In practice, the sealing ring 60' will be stressed between the abutment surfaces 56' and 58' so that the sealing face 70' will remain in contact with the abutment surface 58', but nevertheless the behaviour of the sealing ring 60' will cause the inner peripheral region 66' to follow, rather than oppose, the axial displacement of the abutment surface 58' in the direction of the arrow X. Consequently, the internal stress in the sealing ring 60' will tend to remain more constant than that in the sealing ring 60 of Figure 1. The peak stresses in the sealing ring 60' will thus be reduced by comparison with those in the sealing ring 60, leading to a longer component life.

Figure 3 shows a practical application of a sealing ring 60' of the type shown in the structure surrounding a turbine stage of a gas turbine engine.

Gas flow through the engine is indicated by an arrow F, which is parallel to the engine axis (not shown).

The structure comprises a support ring 2 and a vane platform 4, corresponding to the components 52', 54' in Figure 2. The vane platform 2 includes an outer wall 6 defining the gas flow path. In practice, the vane platform 4 is made up of a plurality of arcuate segments. Upstream of the support ring 2 and the vane platform 4, there is a high pressure turbine seal liner 8 supported by a cassette including a support 10. Again, the seal liner 8 and the support 10 are segmented.

The support ring 2 and the vane platform 4 are annular and centred on the engine axis. The vane platform 4 has an axial projection 12 which engages a circumferential slot 14 in the support ring 2 in order to permit relative axial movement between the vane platform 4 and the support ring 2 while providing a seal between these components. Separate means (not shown) is provided for axial location of the vane platform 4 within the engine.

The support ring 2 has a radially inwardly directed flange 16 which terminates short of the upstream end of the vane platform 4, leaving a gap 18. This gap 18 is sealed by a sealing ring 60'. Components of the sealing arrangement corresponding to those shown in Figure 2 are designated by the same reference numbers.

The inwardly projecting flange 16 has, at its radially inner end, a flat abutment surface 56' which extends radially of the engine axis and faces rearwardly with respect to the arrow X.

The vane platform 4 has, towards its upstream end (with regard to the direction of gas flow F), a radially outwardly directed rib 24 provided with a flat abutment surface 58' which is parallel to the abutment surface 56' but displaced axially in the direction X.

The sealing ring 60' is thus resiliently stressed between the abutment surfaces 56' and 58' so that the contact faces 68' and 70' (Figure 2) makes sealing contact with the abutment surfaces 56', 58'.

In operation, the sealing ring 60' responds to thermal gradients in the manner described with reference to Figure 2, so that thermally induced stresses in the sealing ring 60' compensate for axial displacement of the abutment surface 58' relative to the abutment surface 56'. Furthermore, it will be appreciated that changes in the radial distance between the abutment surfaces 56' and 58' can be accommodated by sliding of the peripheral region 64', 66' over those abutment surfaces.

The support ring 2 and the vane platform 4 define between them a chamber 34 which, in operation of the engine, is supplied with air at high pressure. The sealing ring 60' is able to withstand this pressure, but bleed means, either in the sealing ring 60' itself or in adjacent parts of the structure, may be provided to permit a flow of air into a space 40 between the vane platform 4 and the HP turbine seal liner 8. The seal liner 8 has a circumferential rib 42 which engages the support ring 2 to prevent radially outward leakage of air from the space 40. Consequently, any relatively low pressure air reaching the space 40 from the chamber 34 emerges into the gas flow path of the engine to provide film cooling over the wall 6.

It will be appreciated that the sealing ring 20 must be made of a material capable of remaining resilient while withstanding the temperatures to which it is exposed in operation of the engine. A suitable material is an aerospace alloy of high temperature capability.

It will also be appreciated that the conical intermediate region 62 may be tailored in geometry to accommodate the varying stresses induced in the region in use. For example, the region 62 may be of a varying thickness, and/or curved in section.

Although the present invention has been described in the context of specific components of a gas turbine engine, it will be appreciated that a similar sealing arrangement may be used in other parts of a gas turbine engine, or indeed in other structures outside the gas turbine engine field.

## Claims

1. A sealing arrangement between first and second annular components (2, 4) having a common axis, the arrangement including a resilient dished sealing ring (60') having an outer peripheral region (64') which contacts an abutment surface (56') of the first component (2) and an inner peripheral region (66') which contacts an abutment surface (58') of the second component (4) whereby the sealing ring (60') is axially stressed between the abutment faces (56', 58'), **characterised in that** the sealing ring (60') is dished so that it extends obliquely from the inner peripheral region (66') in a direction inclined rearwardly from a radial plane containing the inner peripheral region (66') with respect to a direction (X) axially outwardly of the abutment surface (58') engaged by the inner peripheral region (66').

2. A sealing arrangement as claimed in claim 1, **characterised in that** the abutment surface (58') engaged by the inner peripheral region (66') is disposed forwardly of the abutment surface (56') engaged by the outer peripheral region (64'), with respect to the said direction (X).

3. A sealing arrangement as claimed in claim 1 or 2, **characterised in that** the abutment surfaces (56', 58') are parallel to each other.

4. A sealing arrangement as claimed in any one of the preceding claims, **characterised in that** at least one of the abutment surfaces (56', 58') extends radially with respect to the common axis.

5. A sealing arrangement as claimed in any one of the preceding claims, in which the sealing ring (60') is made from a resilient metallic material.

6. A sealing arrangement as claimed in any one of the preceding claims, **characterised in that** the inner and outer peripheral regions (64', 66') of the sealing ring (60') comprise sealing rims.

7. A sealing arrangement as claimed in any one of the preceding claims, **characterised in that** the sealing ring (60') comprises an intermediate region (62') which extends between the inner and outer peripheral regions (64', 66').

8. A sealing arrangement as claimed in claim 7, **characterised in that** the intermediate region (62') has a substantially constant thickness.

9. A sealing arrangement as claimed in any one of the preceding claims, **characterised in that** the first and second annular components (4, 6) comprise components of a gas turbine engine.

10. A sealing arrangement as claimed in claim 9, **characterised in that** the first and second annular components (4, 6) comprise components of a turbine stage of the gas turbine engine.
